(19) **Europäisches Patentamt** / **European Patent Office** / **Office européen des brevets**

(11) **EP 1 640 068 B1**

(12) **EUROPEAN PATENT SPECIFICATION**

(45) Date of publication and mention
of the grant of the patent:
**24.06.2009 Bulletin 2009/26**

(51) Int Cl.:
**B01J 35/04** *(2006.01)*   **B01D 39/20** *(2006.01)*
**C04B 38/00** *(2006.01)*   **B28B 11/00** *(2006.01)*

(21) Application number: **04723376.2**

(22) Date of filing: **25.03.2004**

(86) International application number:
**PCT/JP2004/004208**

(87) International publication number:
**WO 2004/085059 (07.10.2004 Gazette 2004/41)**

(54) **PROCESS FOR PRODUCING HONEYCOMB STRUCTURE**

VERFAHREN ZUR HERSTELLUNG EINER WABENSTRUKTUR

PROCEDE DE PRODUCTION D'UNE STRUCTURE EN NID D'ABEILLE

(84) Designated Contracting States:
**DE FR PL**

(30) Priority: **26.03.2003 JP 2003084351**

(43) Date of publication of application:
**29.03.2006 Bulletin 2006/13**

(73) Proprietor: **NGK INSULATORS, LTD.**
**Nagoya-City, Aichi Pref. 467-8530 (JP)**

(72) Inventors:
• **MUROI, Yumi**
**2-56 Suda-cho Nagoya-shi Aichi 467-8530 (JP)**

• **WATANABE, Atsushi**
**2-56 Suda-cho Aichi 467-8530 (JP)**

(74) Representative: **Paget, Hugh Charles Edward et al**
**Mewburn Ellis LLP**
**33 Gutter Lane**
**London**
**EC2V 8AS (GB)**

(56) References cited:
**EP-A- 0 295 343      EP-A- 1 452 702**
**WO-A-03/097314      JP-A- 8 187 435**
**JP-A- 10 314 523      JP-A- 2001 300 922**
**JP-A- 2002 173 381**

## Description

### TECHNICAL FIELD

The invention relates to a method of manufacturing a honeycomb structure used as a dust collection filter, such as a diesel particle filter (DPF), which catches and removes particulates contained in exhaust gas of a diesel engine.

### BACKGROUND ART

In a related method of manufacturing a honeycomb structure, a plurality of porous honeycomb segments made of silicon carbide are bonded together using an adhesive to be shaped into a predetermined shape with a circular cross section and the like. Then, the periphery of the honeycomb segments is coated with a coating material layer. This honeycomb carrier is placed as a DPF in the exhaust system of a diesel engine and cleans exhaust gas (See Japanese Patent Application Publication Laid-open No. 2002-126427).

The honeycomb structure as a DPF requires low pressure loss and a high dust collection efficiency Accordingly, the honeycomb structure catalyst has many cells, and part of the cells are sealed.

US 2002/0066982 proposes sealing the cells of a ceramic honeycomb body by dipping an end surface of the body into cell sealing material. JP 10-314523 proposes a system for sealing the end surfaces of honeycomb filters.

### DISCLOSURE OF THE INVENTION

The invention provides a method of manufacturing a honeycomb structure, which prevents the occurrence of sinks or through holes in a portion where cells are sealed. This method reduces slurry in the cells.

The invention is directed to a method according to claim 1.

The slurry may be removed from the end surface of the honeycomb carrier, while separating the honeycomb carrier from the reservoir tank.

The slurry may be dried by blowing air on, or applying heat to, the end surface of the honeycomb carrier separated from the reservoir tank.

The honeycomb carrier with the slurry pressed into said part of the cells may be separated from the reservoir tank before removing the slurry from the end surface of the honeycomb carrier.

The slurry may be removed from the end surface of the honeycomb carrier before drying the slurry by blowing air on, or applying heat to, the end surface of the honeycomb carrier separated from an inside of the reservoir tank.

### BRIEF DESCRIPTION OF THE DRAWINGS

Fig. 1 is a perspective view illustrating a honeycomb structure of an embodiment.
Fig. 2 is a transverse cross-sectional view of the honeycomb structure in Fig. 1.

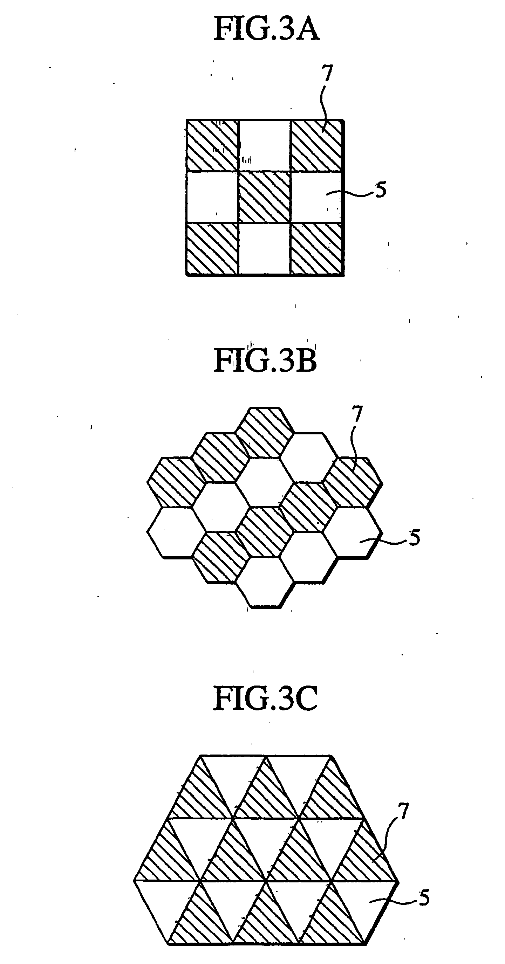

Figs. 3A, 3B, and 3C are plan views illustrating other cell shapes.
Fig. 4 is a perspective view of a honeycomb carrier having a film attached thereto.
Fig. 5 is a cross-sectional view of the honeycomb carrier in Fig. 4.
Fig. 6 is a cross-sectional view for explaining the step of immersing the honeycomb carrier in a slurry.
Fig. 7 is a cross-sectional view for explaining a process that causes sinks in the end surface of the honeycomb carrier.
Fig. 8 is a cross-sectional view for explaining the step of removing the slurry from the end surface of the honeycomb carrier.
Fig. 9 is a cross-sectional view for explaining the step of blowing air on the end surface of the honeycomb carrier.
Figs. 10A and 10B are cross-sectional views for explaining method A2 that allows the slurry to be removed from the end surface of the honeycomb carrier.
Figs. 11A and 11B are cross-sectional views for explaining method B2 that allows the slurry to be removed from the end surface of the honeycomb carrier.
Figs. 12A and 12B are cross-sectional views for explaining method C2 that allows the slurry to be removed from the end surface of the honeycomb carrier.
Figs. 13A and 13B are cross-sectional views for explaining method D2 that the slurry to be removed from the end surface of the honeycomb carrier.

**BEST MODES FOR CARRYING OUT THE INVENTION**

Hereinafter, an embodiment of the invention will be specifically described. In each drawing, the identical components with those of drawings mentioned earlier are denoted by the identical reference numerals to be related thereto.

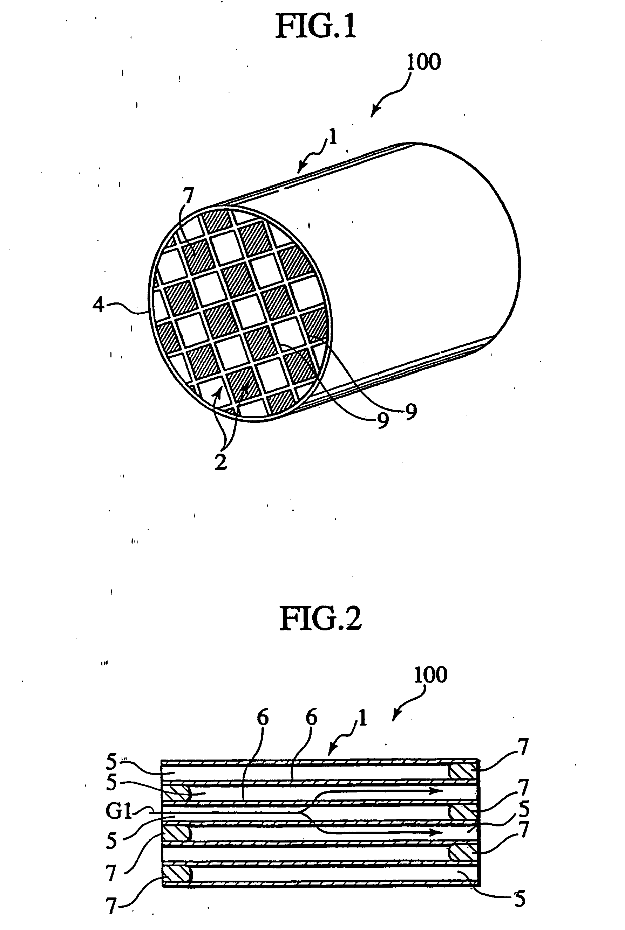

As shown in Fig. 1, a honeycomb structure 100 is placed as a DPF in the exhaust system of a diesel engine to clean exhaust gas. The honeycomb structure 100 includes a honeycomb carrier 1. The honeycomb carrier 1 includes porous honeycomb segments 2 made of silicon carbide. The honeycomb segments 2 are bonded together using an adhesive 9, thus being shaped into a circular cross section. The periphery thereof is surrounded by a coating 4.

The honeycomb carrier 1 has many cells 5, and part of them are sealed. This reduces pressure loss, thus achieving a high collection efficiency.

Referring to Fig. 2, each of the honeycomb segments 2 has a plurality of cells 5 partitioned by porous partitions 6. Each of the partitions 6 holds washcoats made of $\gamma$-alumina, and catalytic metal in the washcoats. The cells 5 extend through the honeycomb segment 2 in the axial direction. One-end portions of neighboring cells 5 are alternately sealed by fillers 7. That is, one end of a cell 5 is open, whereas the other end thereof is sealed by the filler 7. One end of the neighboring cell 5 is sealed by the filler 7, whereas the other end thereof is open.

In this structure, exhaust gas G1 flows into the cells 5 having the open left ends. The exhaust gas G1 passes through the porous partitions 6 to move to the other cells 5, thus flowing out from the other cells 5. While the exhaust gas G1 passes through the partitions 6, particulates in the exhaust gas G1 are caught on the partitions 6. Thus, the exhaust gas G1 is cleaned.

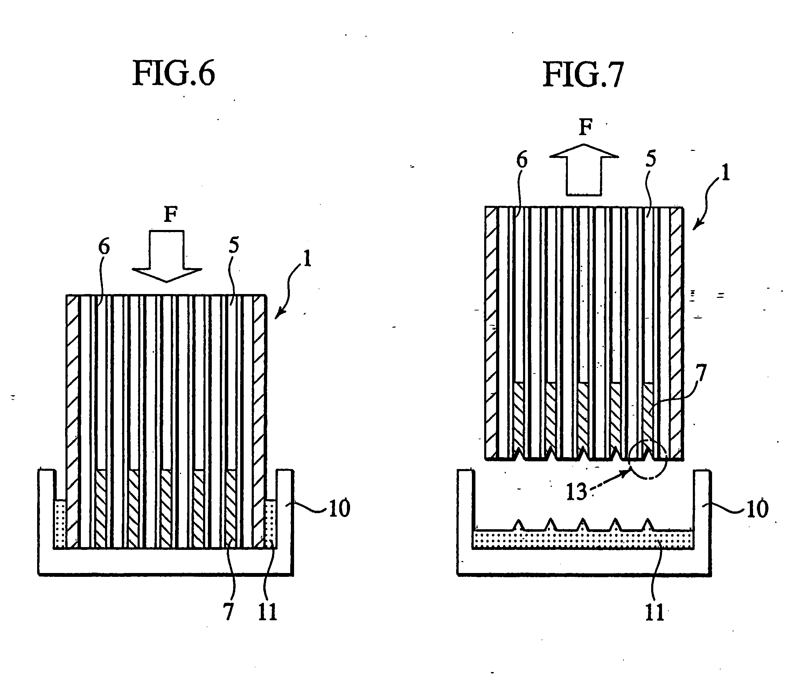

The shape of the cells 5 of the honeycomb carrier 1 is not limited to this embodiment. Rectangular cells illustrated in Fig. 7A, hexagonal cells illustrated in Fig. 7B, triangular cells illustrated in Fig. 7C, or other shapes may also be acceptable.

A method of manufacturing the honeycomb structure 100 will be described.

The raw material for the honeycomb catalyst 1 employs at least one ceramic selected from the group consisting of silicon carbide (SiC), silicon nitride ($SisN_4$), cordierite ($2MgO.2Al_2O_3.5SiO_2$), alumina ($Al_2O_3$), mullite, zirconia, zirconium phosphate, aluminum titanate, titania, and a combination of some of these; Fe-Cr-Al-family metal; nickel-family metal; or metal Si and SiC.

A binder of methylcellulose and hydroxypropoxyl methylcellulose, a surface-active agent, and water are added to the above-described raw material to prepare a plastic puddle. This puddle is extruded, thus forming the prismatic honeycomb segments 2. Each of the honeycomb segments 2 is partitioned by the partitions 6 and has many cells 5 extending through the honeycomb segment 2 in the axial direction. These honeycomb segments 2 are formed into the honeycomb carrier 1 of this embodiment. The honeycomb carrier 1 is dried and fired to harden, and then is provided to the cell-sealing step.

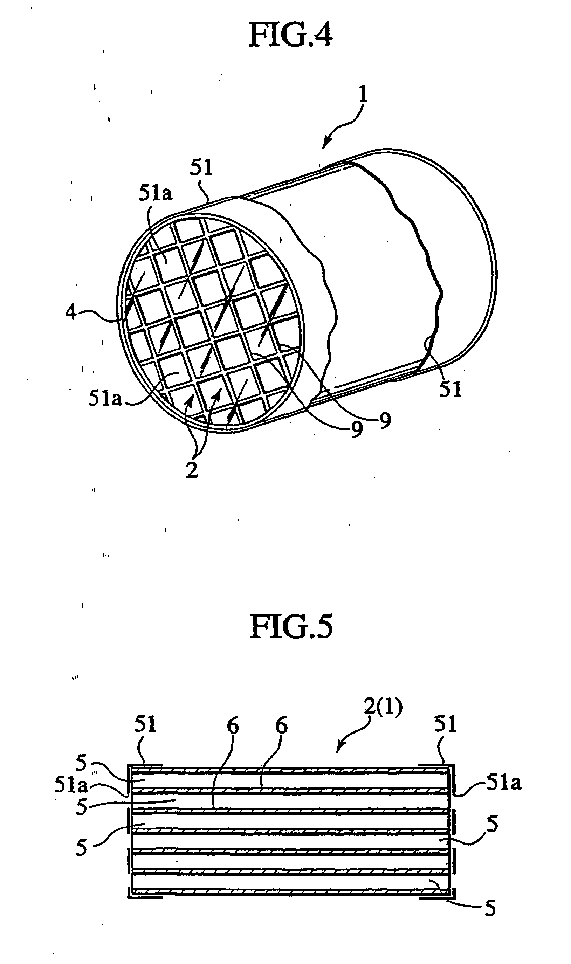

Next, the method of sealing cells of the honeycomb carrier 1 (honeycomb segments 2) will be described with reference to Figs. 4 to 9.

As for the overview, the end surface of the honeycomb carrier 1 having many cells 5 that are partitioned by the partitions 6 and that extend through the honeycomb carrier 1 in the axial direction, is immersed in a slurry 11 containing a ceramic powder in a reservoir tank 10. In this state, the end surface of the honeycomb carrier 1 is pressed against the bottom surface of the reservoir tank 10. This method permits the slurry 11 to be pressed into at least part of the cells 5. Then, the honeycomb carrier 1 is separated from the reservoir tank 10. Thus, at least part of the cells 5 are sealed.

Specifically, for example, a ceramic powder is mixed into water as a dispersion medium, which prepares the slurry 11. A binder, a deflocculant, or the like may be appropriately added to the slurry. The ceramic powder may be appropriately selected from cordierite or the aforementioned raw materials for the honeycomb carrier. The binder may employ polyvinyl alcohol or other resin having heat-induced gelation characteristics. The resin having heat-induced gelation characteristics bonds the ceramic powder during gelation, and therefore effectively prevents sinks. This resin may select methylcellulose.

The slurry 11 is used after being adjusted to a viscosity of approximately 5 to 50 Pa·s ($N/m^2$.s), more preferably a viscosity in the range of 10 to 20 Pa·s. In a slurry having viscosity less than 5 Pa·s, sinks tend to occur. A slurry having viscosity above 50 Pa·s increases flow resistance, reduces the amount thereof pressed into the cells, and reduces the sealed depths.

Referring to Figs. 4 and 5, a mask 51 is attached to the end surface of the honeycomb carrier 1 prior to cell sealing in order to alternately seal the neighboring cells 5 of the honeycomb carrier 1. The mask 51 is attached to the entire end surface of the honeycomb carrier 1. Then, holes 51a are formed to the portions coinciding with the cells 5 to be sealed. This hole formation is performed by applying laser light to the portions coinciding with the cells 5 to be sealed. The mask 51 employs, for example, resin such as polyethylene or polyester.

Referring to Fig. 6, the inside of the reservoir tank 10 is filled with the slurry 11 with a ceramic powder dispersed in a dispersion medium. One end surface of the honeycomb carrier 1 is immersed in the slurry 11 in the reservoir tank 10. With this immersed state, pressure is applied to the honeycomb carrier 1, whereby the end surface of the honeycomb carrier 1 is pressed against the bottom surface of the reservoir tank 10. This press permits the slurry 11 to be pressed into part of the cells 5. That is, the slurry 11 is pressed into the cells 5 coinciding with the holes 51a of the mask 51.

The press may be performed by applying a pressure of approximately 0.05 to 0.5 MPa or 0.1 to 0.2 MPa. In this case, the end surface of the honeycomb carrier 1 is immersed so as to be orthogonal to the walls of the reservoir tank 10.

In the case where the slurry 11 is pressed into the cells 5, the pressing-in action may be performed on the end surfaces of the honeycomb carrier 1 one after another, or may be performed on both end surfaces at the same time.

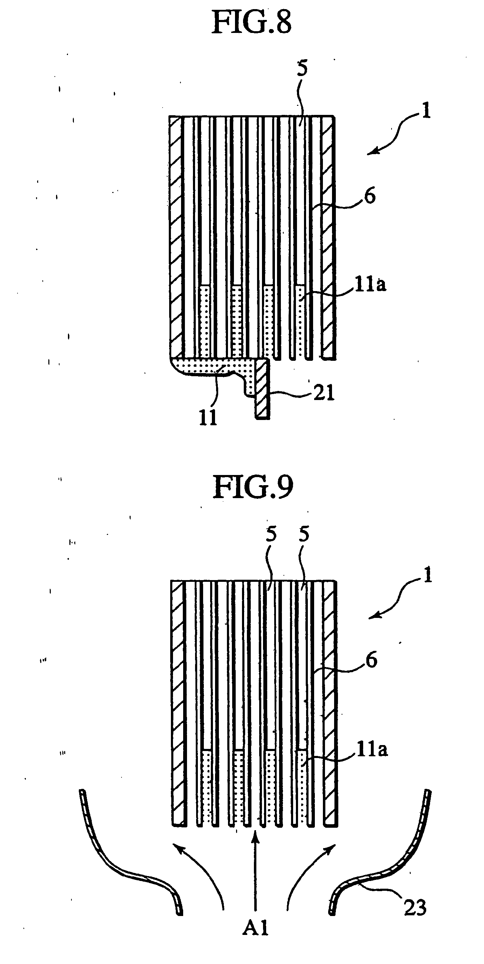

Referring to Fig. 8, after the pressing-in of the slurry 11, the honeycomb carrier 1 is extracted from the reservoir tank 10 to be separated therefrom. The mask 51 is removed from the honeycomb carrier 1. The cells 5 have a slurry 11a as the filler 7 pressed thereinto. In the separation, the slurry 11 attached to the end surface of the honeycomb carrier 1 is removed. That is, a scraper 21 is brought into contact with the end surface of the honeycomb carrier 1 with the slurry 11 pressed thereinto. With the contact state maintained, the honeycomb carrier 1 and the scraper 21 are slid relative to each other.

This removal of the slurry 11 forces the slurry 11a in the cells 5 and the slurry 11 outside the cells 5 to be separated from each other. This separation prevents the occurrence of sinks due to negative pressure or viscosity. Also during the removal of the mask 51, the slurry 11a in the cells 5 is prevented from accompanying the slurry 11 outside the cells 5. This prevents the occurrence of sinks due to this accompaniment.

Furthermore, this removal of the slurry 11 allows the surface of the slurry 11a in the cells 5 to be exposed to the atmosphere. Thus, the slurry 11a is forced to dry during a short time, which hardens the surface of the slurry 11a in the cells 5. During heating and drying of the slurry, while the slurry 11a in the cells 5 is dried and shrunk in the cells, this hardening of the surface prevents the occurrence of sinks on the surface of the slurry 11a.

Referring to Fig. 9, in another embodiment, after the slurry 11a has been pressed into the cells 5 of the honeycomb carrier 1, the honeycomb carrier 1 is separated from the reservoir tank 10. Then, air is blown on, or heat is applied to, the end surface portion of the honeycomb carrier 1 with the slurry 11a filled therein, thus drying the slurry 11a,

To be more detailed, a blower 23 blows air A1 on the end surface of the honeycomb carrier 1 with the slurry 11a filled. The air A1 may be any one of either cold air or warm air. The air A1 at approximately 25°C in the case of cold air, or the air A1 at approximately 60°C in the case of warm air is blown on the end surface of the honeycomb carrier 1, thus drying the slurry 11a. In this case, for example, the air speed is approximately 8 to 10 m/sec, and air blowing is completed in approximately 30 seconds.

The slurry 11a may be heated and dried by bringing a heat source into direct contact with the end surface of the honeycomb carrier 1 without blowing air. In this case, the end surface is kept in contact with the heat source at approximately 140°C for approximately 30 seconds.

By the above-described air blowing or heating, the surface of the slurry 11a in the cells 5 is forced to dry in a short time, thus hardening the surface of the slurry 11a in the cells 5. Thus, during the heating and drying of the slurry, the sinks are prevented from occurring on the surface of the slurry 11a, with the slurry 11a in the cells 5 dried and shrunk in the cells.

In still another embodiment, the removal and drying of the slurry 11a may be sequentially carried out. That is, when the honeycomb carrier 1 is separated from the slurry 11, the slurry 11 attached to the end surface of the honeycomb carrier 1 is removed. In addition to this removal, after the honeycomb carrier 1 has been separated from the slurry 11, the slurry 11a may be dried by blowing air on, or applying heat to, the end surface portion of the honeycomb carrier 1 with the slurry 11a filled therein.

By combining the forced removal of the slurry from the end surface of the honeycomb carrier 1 and the blowing of air on, or the application of heat to, the end surface portion of the honeycomb carrier 1, the sinks are more reliably prevented from occurring.

A comparative example will be described with reference to Fig. 7. After the slurry 11 has been pressed into the cells 5, the honeycomb carrier 1 is raised from the reservoir tank 10, and heated and dried in a drying furnace. By doing so, the slurry 11 pressed into the cells 5 becomes the fillers 7 sealing the cells 5. The sinks, however, occur in the fillers 7.

Examples

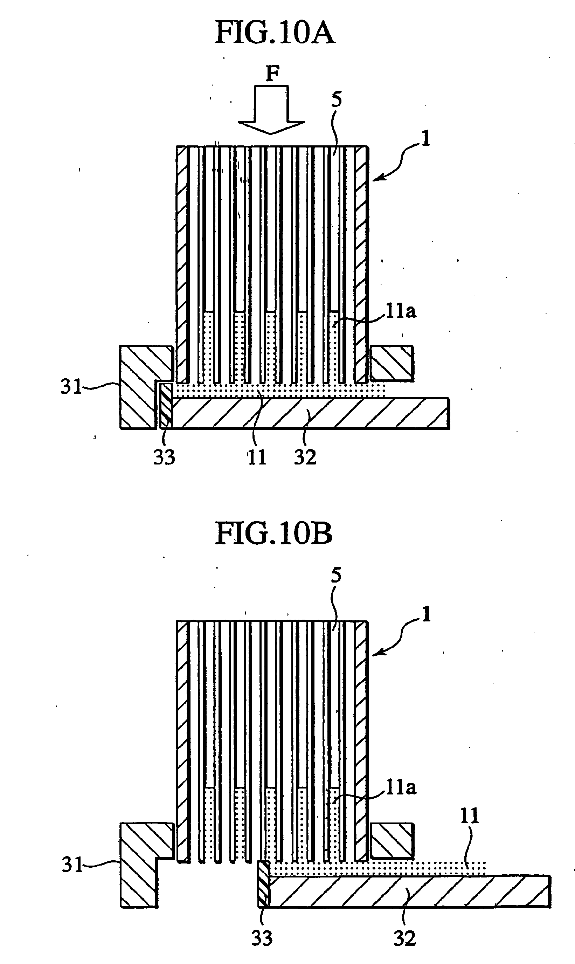

Referring to Figs. 10A to 13B, the bottom surface of the reservoir tank 31 has a slide member 32 to slide in a direction normal to the end surface of the honeycomb carrier 1. The slide member 32 constitutes part of the reservoir tank 31, and the upper surface thereof is filled with the slurry 11.

One end portion of the slide member 32 is attached to a scraper 33 in an upright position. The scraper 33 employs rubber or soft resin having a thickness of 0.1 to 2.0 mm. The upper end portion of the scraper 33 stands to be at a height of 0.1 to 2.0 mm from the upper surface of the slide member 32. Sliding of the slide member 32 allows the scraper 33 to move in contact with the end surface of the honeycomb carrier 1. This movement removes the slurry 11 attached to the outside of the end surface of the honeycomb carrier 1. Incidentally, the scraper 33 of this example is made of a resin having a thickness of 0.5 mm and placed at a height of 0.5 mm from the upper surface of the slide member 32.

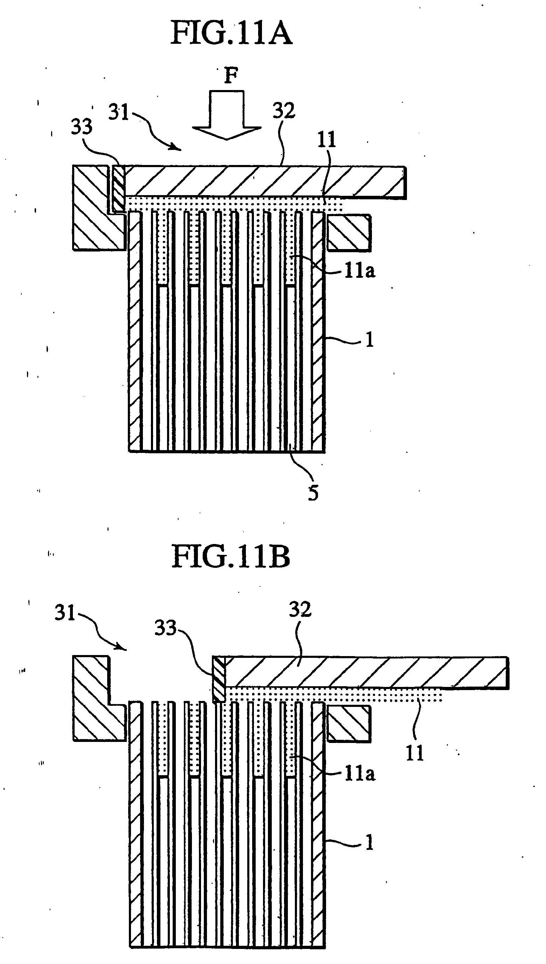

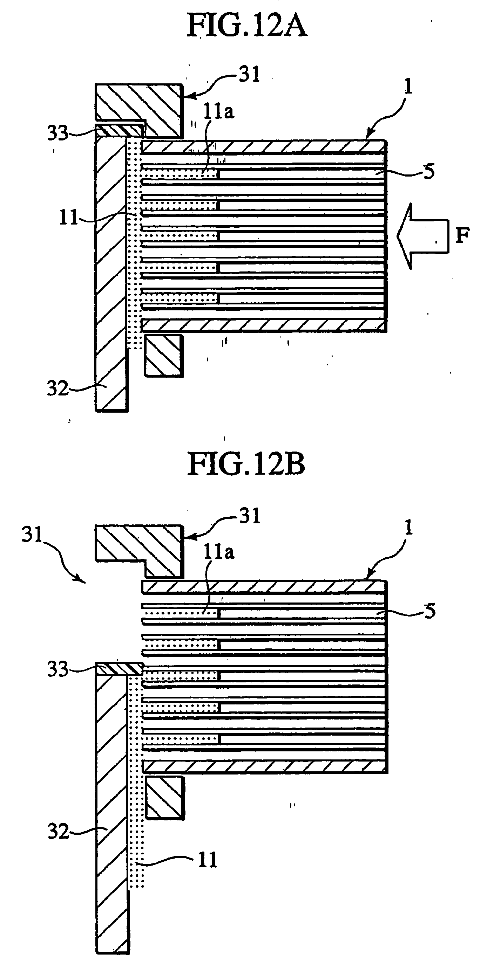

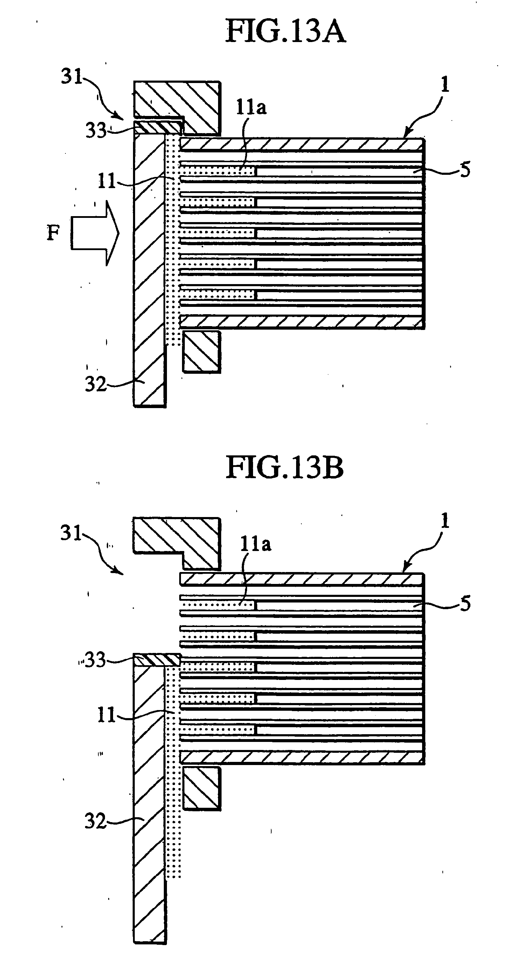

Hereinafter, method A2 shown in Figs. 10A and 10B, method B2 shown in Figs. 11A and 11B, method C2 shown in Figs. 12A and 12B, and method D2 shown in Figs. 13A and 13B will be described.

In method A2, as shown in Fig. 10A, the honeycomb carrier 1 is brought into contact with the slide member 32 from the above. The honeycomb carrier 1 is pushed in the direction of the arrow, whereby the end surface thereof is pressed against the slide member 32. This pressing allows the slurry 11 to be pressed into the cells 5 of the honeycomb carrier 1. Then, as shown in Fig. 10B, the slide member 32 is slid in a horizontal direction. This sliding permits the scraper 33 to scrape and remove the slurry 11 attached to the outside of the end surface of the honeycomb carrier 1.

In method B2, as shown in Fig. 11A, the slide member 32 is brought into contact with the honeycomb carrier 1 from the above. The slide member 32 is pushed in the direction of the arrow, whereby the end surface of the honeycomb carrier 1 is pressed against the slide member 32. This pressing allows the slurry 11 to be pressed into the cells 5 of the honeycomb carrier 1. Then, as shown in Fig. 11B, the slide member 32 is slid in a horizontal direction. This sliding permits the scraper 33 to scrape and remove the slurry 11 attached to the outside of the end surface of the honeycomb carrier 1.

In method C2, as shown in Fig. 12A, the honeycomb carrier 1 is brought into contact with the slide member 32 from a transverse direction (right) of the slide member 32, whereby the end surface of the honeycomb carrier 1 is pressed against the slide member 32. This pressing allows the slurry 11 to be pressed into the cells 5 of the honeycomb carrier 1. Then, as shown in Fig. 12B, the slide member 32 is slid in the vertical direction. This sliding permits the scraper 33 to scrape and remove the slurry 11 attached to the outside of the end surface of the honeycomb carrier 1.

In method D2, as shown in Fig. 13A, the slide member 32 is brought into contact with the honeycomb carrier 1 from a transverse direction (left) of the honeycomb carrier 1, whereby the end surface of the honeycomb carrier 1 is pressed against the slide member 32. This pressing allows the slurry 11 to be pressed into the cells 5 of the honeycomb carrier 1. Then, as shown in Fig. 13B, the slide member 32 is slid in the vertical direction. This sliding permits the scraper 33 to scrape and remove the slurry 11 attached to the outside of the end surface of the honeycomb carrier 1.

Next, in this example, the honeycomb carrier 1 was manufactured and evaluated as follows.

There was a used honeycomb carrier (having an outer shape of a quadrangular prism, 35 mm square bases, a length of 150 mm, and a rectangular cell shape) which has a plurality of cells to serve as passages for fluid and which is made of cordierite. This honeycomb carrier was manufactured as follows: a puddle prepared at an appropriate viscosity was extruded and shaped using a nozzle having the aforementioned cell shape, partition thickness, and cell density, and dried; and, then, both end surfaces were cut into plane surfaces.

In order to alternately seal the neighboring cells (i.e., seal cells in a checkerboard pattern) at the end surface of the honeycomb carrier, part of the cells were masked. As for the masking method, an adhesive film (commercially available one which is made of a resin and in which an adhesive is applied to one surface) was attached to the entire end surface of the honeycomb carrier. Then, using a laser, holes were made in portions coinciding with the cells which need a sealed portion.

Next, the masked end surface of the honeycomb carrier was immersed in a reservoir tank in which slurry was reserved. The end surface of the honeycomb carrier was pressed against the inner bottom surface of the reservoir tank. Thus, the slurry was pressed into the non-masked cells of the plurality of cells, thus forming sealed portions. At this time, the slurry is spread in the reservoir tank to form a smooth surface. The honeycomb carrier is pushed with the masked end surface thereof facing towards the bottom surface of the reservoir tank (i.e., it is set perpendicular to the liquid surface). Thus, the masked end surface of the honeycomb carrier was immersed in the slurry.

Incidentally, the slurry was prepared as follows. That is, cordierite powder as a ceramic powder; methylcellulose, which is a thermo gelling binder, as a binder; and a polymer surface-active agent as a deflocculant were mixed. Further, water as a dispersion medium was added thereto, and they were mixed together.

An evaluation was performed as follows. 50 honeycomb carriers in which cells were sealed were manufactured, and the number of cells of each of the honeycomb carriers in which the sinks had occurred was checked by visual inspection. According to the expression (1) described below, the occurrence frequency of sinks was calculated for each of the honeycomb carriers. That is, an average of the occurrence frequency of sinks was calculated for the 50 honeycomb carriers. The average was evaluated as the occurrence frequency of sinks. Incidentally, the total number of sealed cells is half of the total number of cells. This is because the cells are alternately sealed in a checkerboard pattern.

$$\text{Sink occurrence frequency (\%)} = ((\text{the number of cells with sinks occurred})/(\text{the total number of sealed cells})) \times 100 \qquad (1)$$

In the slurry press-in method of the aforementioned "method A2", "method B2", "method C2", or "method D2", a honeycomb carrier was pressed against the inner bottom surface of a reservoir tank. Then, unnecessary slurry attached to the end portion of the honeycomb carrier was removed by sliding a scraper attached to the bottom surface portion of the reservoir tank, and the honeycomb carrier was taken out.

On the other hand, in each slurry press-in method of "method A1", "method B1", "method C1", and "method D1", a honeycomb carrier was pressed against the inner bottom surface of a reservoir tank. Then, the honeycomb carrier was raised without being processed and taken out.

Of these slurry press-in methods, in "method A1" or "method A2", pressure was applied from the honeycomb carrier side with the honeycomb carrier placed on the upper side and with the reservoir tank placed on the lower side. In "method B1" or "method B2", pressure was applied from the reservoir tank side with the honeycomb carrier placed on the lower side and with the reservoir tank placed on the upper side. In "method C1" or "method C2", pressure was applied from the honeycomb carrier side with the honeycomb carrier and the reservoir tank arranged in a transverse direction. In "method D1" or "method D2", pressure was applied from the reservoir tank side with the honeycomb carrier and the reservoir tank arranged in a transverse direction.

As for the method of drying slurry, a honeycomb carrier was pressed against the inner bottom surface of a reservoir tank and then taken out. Immediately after this, the honeycomb carrier was put into a hot-air drying furnace to be dried at 90°C for 40 min. (referred to as method a). Cool air of 25°C and 8 to 10 m/sec was applied to the end portion of the honeycomb carrier for 30 sec. Then, the honeycomb carrier was put into a hot-air drying furnace to be dried at 90°C for 40 min. (referred to as method b). Warm air of 60°C and 8 to 10 m/sec was applied to the end portion of the honeycomb carrier for 30 sec. Then, the honeycomb carrier was put into a hot-air drying furnace to be dried at 90°C for 40 min. (referred to as method c). A heat source at 140°C was brought into direct contact with the end portion of the honeycomb carrier for 30 sec. Then, the honeycomb carrier was put into a hot-air drying furnace to be dried at 90°C for 40 min. (referred to as method d).

Table 1 indicates sink occurrence frequencies corresponding to the slurry press-in methods. Table 2 indicates sink occurrence frequencies corresponding to the slurry-drying methods. Table 3 indicates sink occurrence frequencies corresponding to cases where a slurry press-in method and a slurry-drying method are combined. Table 4 indicates sink occurrence frequencies corresponding to cell densities.

**Table 1**

| | Partition Thickness ($\mu$m) | Cell Density (Number of Cells/cm$^2$) | Total Cell Number | Slurry Press-Into Method | Slurry-Drying Method | Sink Occurrence Frequency (%) |
|---|---|---|---|---|---|---|
| Comparative Example 1 | 15 | 200 | 380 | Method A1 | Method a | 35.6 |
| Comparative Example 2 | 15 | 200 | 380 | Method B1 | Method a | 42.1 |
| Comparative Example 3 | 15 | 200 | 380 | Method C1 | Method a | 38.0 |
| Comparative Example 4 | 15 | 200 | 380 | Method D1 | Method a | 49.7 |
| Example 1 | 15 | 200 | 380 | Method A2 | Method a | 3.2 |
| Example 2 | 15 | 200 | 380 | Method B2 | Method a | 4.1 |
| Example 3 | 15 | 200 | 380 | Method C2 | Method a | 2.7 |
| Example 4 | 15 | 200 | 380 | Method D2 | Method a | 3.4 |

**Table 2**

| | Partition Thickness (μm) | Cell Density (Number of Cells/cm$^2$) | Total Cell Number | Slurry Press-Into Method | Slurry-Drying Method | Sink Occurrence Frequency (%) |
|---|---|---|---|---|---|---|
| Comparative Examples 5 | 15 | 200 | 380 | Method A1 | Method a | 35.6 |
| Comparative Example 6 | 16 | 200 | 475 | Method A1 | Method b | 4.2 |
| Comparative Example 7 | 15 | 200 | 570 | Method A1 | Method | 5.0 |
| Comparative Example 8 | 15 | 200 | 380 | Method A1 | Method d | 3.6 |

**Table 3**

| | Partition Thickness (μm) | Cell Density (Number of Cells/cm$^2$) | total Cell Number | Slurry Press-Into Method | Slurry-Drying Method | Sink Occurrence Frequency (%) |
|---|---|---|---|---|---|---|
| Comparative Example 9 | 15 | 200 | 380 | Method A1 | Method a | 35.6 |
| Example 5 | 15 | 200 | 570 | Method A2 | Method a | 3.2 |
| Comparative Example 10 | 15 | 200 | 380 | Method A1 | Method b | 4.1 |
| Example 6 | 15 | 200 | 630 | Method A2 | Method b | 0.3 |
| Example 7 | 15 | 200 | 570 | Method A2 | Method c | 0.2 |
| Example 8 | 16 | 200 | 630 | Method B2 | Method c | 0.8 |

**Table 4**

| | Partition Thickness (μm) | Cell Density (Number of Cells/cm$^2$) | Total Cell Number | Slurry Press-Into Method | Slurry-Drying Method | Sink Occurrence Frequency (%) |
|---|---|---|---|---|---|---|
| Comparative Example 11 | 15 | 200 | 380 | Method A1 | Method a | 35.6 |
| Comparative Example 12 | 15 | 250 | 475 | Method B1 | Method a | 39.7 |
| Comparative Example 13 | 12 | 300 | 570 | Method C1 | Method a | 32.0 |
| Example 9 | 15 | 200 | 380 | Method A2 | Method b | 0.7 |
| Example 10 | 15 | 250 | 475 | Method A2 | Method b | 0.5 |
| Example 11 | 11 | 270 | 515 | Method A2 | Method b | 0.2 |
| Example 12 | 12 | 300 | 570 | Method A2 | Method b | 0.2 |
| Example 13 | 13 | 330 | 630 | Method A2 | Method b | 0.1 |

According to comparisons between comparative examples 1 to 4 and examples to 4, between comparative example 5 and comparative examples 6 and 7 , between comparative examples 9 and 10 and example 5 and examples 6 to 8 , and between comparative examples 11 to 13 and examples 9 to 13, as for a slurry-drying method, the following conditions are effective. The time is 0 to 30 sec, from when the honeycomb carrier is pressed against the inner bottom surface of the reservoir tank until the end portion starts to be dried using cool air, warm air, or a heat source. The time for drying using the cool air, the warm air, or the heat source is 10 sec or more. The temperature of the heat source is 50 to 200°C. The air speed of the cool air or the warm air is 5 to 20 m/sec.

Incidentally, the scraper for removing the slurry is effective in the case where the height from the bottom surface of the reservoir portion is 0.1 to 2.0 mm, where the material is plastic or rubber, and where the thickness is 0.1 to 2.0 mm.

## INDUSTRIAL APPLICABILITY

A honeycomb structure of the invention is used for cleaning exhaust gas of a vehicle, for example. In particular, the honeycomb structure is useful in terms of removing particulates from exhaust gas of a diesel car.

According to the invention, the slurry in the cells and the slurry outside the cells are forced to separate from each other. This separation prevents the occurrence of the sinks due to negative pressure or viscosity. This separation prevents the slurry in the cells from accompanying the slurry outside the cells when the mask is removed, and thus prevents the occurrence of sinks due to this accompaniment.

Further, after the honeycomb carrier has been separated from the inside of the reservoir tank, the unnecessary slurry layer is removed from the end surface of the honeycomb carrier. This removal allows the surface of the sealed portion to be exposed to the atmosphere for forced drying, thus hardening the slurry on the end surface of the honeycomb carrier. This prevents the occurrence of sinks due to the drying and shrinking of the slurry in the cells when the slurry is heated and dried.

Air blowing or heating forces the slurry to dry in the cells in a short period of time, and therefore forces the slurry to dry and harden on the end surface portion in the cells in a short period of time. This prevents the sinks from occur-ing during drying.

Relative sliding of the scraper easily and reliably removes the slurry from the end surface of the honeycomb carrier.

## Claims

1. A method of manufacturing a honeycomb structure, comprising:

    immersing an end surface of a honeycomb carrier (1) in a slurry (11) containing a ceramic powder in a reservoir tank (10, 31);
    pressing the slurry into part of cells (5) of the honeycomb carrier while pressing the end surface of the honeycomb carrier against a bottom surface of the reservoir tank;
    separating, from the reservoir tank, the honeycomb carrier with the slurry pressed into said part of the cells; and
    removing the slurry attached to the end surface of the honeycomb carrier;
    **characterised in that** the slurry is removed by sliding a scraper (21, 33) relative to the end surface of the honeycomb carrier.

2. The method of manufacturing a honeycomb structure according to claim 1, wherein the slurry is removed from the end surface of the honeycomb carrier, while separating the honeycomb carrier from the reservoir tank.

3. The method of manufacturing a honeycomb structure according to claim 1, wherein the slurry is dried by blowing air on, or applying heat to, the end surface of the honeycomb carrier separated from the reservoir tank

4. The method of manufacturing a honeycomb structure according to claim 1, wherein the honeycomb carrier with the slurry pressed into said part of the cells is separated from the reservoir tank before removing the slurry from the end surface of the honeycomb carrier.

## Patentansprüche

1. Verfahren zur Herstellung einer Wabenstruktur, umfassend:

das Eintauchen einer Stirnoberfläche eines Wabenträgers (1) in eine Aufschlämmung (11), die ein Keramikpulver in einem Sammelbehälter (10, 31) enthält;

das Pressen der Aufschlämmung in einen Teil von Zellen (5) des Wabenträgers indem die Stirnoberfläche des Wabenträgers gegen eine Bodenoberfläche des Sammelbehälters gepresst wird;

das Trennen des Wabenträgers mit der in einen Teil der Zellen hineingepressten Aufschlämmung von dem Sammelbehälter; und

das Entfernen der an der Stirnoberfläche des Wabenträgers haftenden Aufschlämmung;

**dadurch gekennzeichnet, dass** die Aufschlämmung durch Gleiten eines Schabers (21, 33) relativ zur Stirnoberfläche des Wabenträgers entfernt wird.

2. Verfahren zur Herstellung einer Wabenstruktur nach Anspruch 1, worin die Aufschlämmung von der Stirnoberfläche des Wabenträgers entfernt wird, indem der Wabenträger von dem Sammelbehälter getrennt wird.

3. Verfahren zur Herstellung einer Wabenstruktur nach Anspruch 1, worin die Aufschlämmung durch Blasen von Luft auf die oder Erhitzen der Stirnoberfläche des von dem Sammelbehälter getrennten Wabenträgers getrocknet wird.

4. Verfahren zur Herstellung einer Wabenstruktur nach Anspruch 1, worin der Wabenträger mit der in einen Teil der Zellen hineingepressten Aufschlämmung von dem Sammelbehälter getrennt wird bevor die Aufschlämmung von der Endoberfläche des Wabenträgers entfernt wird.

## Revendications

1. Procédé de fabrication d'une structure en nid d'abeilles, comprenant:

immerger une surface d'extrémité d'un support en nid d'abeilles (1) dans une boue (11) contenant une poudre céramique dans un réservoir (10, 31);

enfoncer la boue dans une partie des alvéoles (5) du support en nid d'abeilles en pressant la surface d'extrémité du support en nid d'abeilles contre une surface de fond du réservoir;

séparer, du réservoir, le support en nid d'abeilles avec la boue enfoncée dans ladite partie des alvéoles; et

retirer la boue attachée à la surface d'extrémité du support en nid d'abeilles;

**caractérisé en ce que** la boue est retirée en faisant glisser une racle (21, 33) relativement à la surface d'extrémité du support en nid d'abeilles.

2. Procédé de fabrication d'une structure en nid d'abeilles selon la revendication 1, dans lequel la boue est retirée de la surface d'extrémité du support en nid d'abeilles pendant la séparation du support en nid d'abeilles du réservoir.

3. Procédé de fabrication d'une structure en nid d'abeilles selon la revendication 1, dans lequel la boue est séchée en soufflant de l'air sur, ou en appliquant de la chaleur à la surface d'extrémité du support en nid d'abeilles séparé du réservoir.

4. Procédé de fabrication d'une structure en nid d'abeilles selon la revendication 1, dans lequel le support en nid d'abeilles avec la boue enfoncée dans ladite partie des alvéoles est séparé du réservoir avant le retrait de la boue de la surface d'extrémité du support en nid d'abeilles.

# FIG.1

# FIG.2

## FIG.3A

## FIG.3B

## FIG.3C

# FIG.4

# FIG.5

# FIG.6

# FIG.7

EP 1 640 068 B1

# FIG.8

# FIG.9

# FIG.10A

# FIG.10B

# FIG.11A

# FIG.11B

# FIG.12A

# FIG.12B

# FIG.13A

# FIG.13B

**EP 1 640 068 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002126427 A
- US 20020066982 A
- JP 10314523 A